# EUROPEAN PATENT SPECIFICATION

(11) **EP 3 960 046 B1**
(45) Date of publication and mention of the grant of the patent: **14.01.2026**
(21) Application number: 19935346.7
(22) Date of filing: 21.10.2019
(51) Int. Cl.: A47J 43/04

(54) **ROTATOR, ROTATION ASSEMBLY, CONTAINER, AND FOOD PROCESSOR**
ROTOR, ROTATIONSANORDNUNG, BEHÄLTER UND KÜCHENMASCHINE
ROTATEUR, ENSEMBLE DE ROTATION, CONTENANT ET ROBOT DE CUISINE

(30) Priority: 28.06.2019 CN 201910578447
(43) Date of publication of application: 02.03.2022
(73) Proprietor: Guangdong Midea Consumer Electric Manufacturing Co., Ltd., Shunde District Foshan, Guangdong 528311 (CN)
(72) Inventor: CHRISTOPHER, Burton, Foshan, Guangdong 528311 (CN); CHEN, Huaqiao, Foshan, Guangdong 528311 (CN)
(74) Representative: Whitlock, Holly Elizabeth Ann
(86) International application number: PCT/CN2019/112179
(87) International publication number: WO 2020/258610

(56) References cited:
- CN-A- 103 371 726
- CN-A- 108 652 479
- CN-U- 206 403 657
- CN-U- 208 973 541
- CN-U- 208 973 541
- CN-Y- 2 865 521
- KR-B1- 100 955 047
- US-A1- 2013 343 150
- US-B1- 6 532 863

## Description

### FIELD OF TECHNOLOGY

The present invention relates to the technical field of material processing, and in particular to a rotation head, a rotation assembly, a container and a food processor.

### BACKGROUND

With the development of science and technology, mixing devices, such as dough mixers, soymilk machines, juicers, wall breakers, etc. are increasingly applied in people's daily life. In these mixing devices, mixing knives or mixing blades are driven to rotate by a drive shaft to automatically cut and/or mix materials.

However, the traditional mixing knives or mixing blades are fixed on the drive shaft, which is not easy to disassemble. It takes a lot of time and effort when they are even disassembled; this makes it difficult for users to clean the mixing knives or mixing blades and the bottom of the mixing device after the mixing device is used. In addition, if the user directly puts his(her) hand into the device with mixing knives to clean it, the hand is easy to be cut by the mixing knives. These are the main user pain points of such products. CN208973541U relates generally to a grinding component for a food processor, in which a dynamic grinding is stably supported,

### SUMMARY

Aspects of the invention are set out in the claims. In the following, each of the described methods, apparatuses, embodiments, examples, and aspects, which do not fully correspond to the invention as defined in the claims is thus not according to the invention and is, as well as the whole following description, present for illustration purposes only or to highlight specific aspects or features of the claims. Embodiments not falling under the scope of the claims should be interpreted as examples useful for understanding the invention. The present invention is intended to solve at least one of the technical problems in the prior art or related art.

An objective of the present invention is to provide a rotation head, a rotation assembly, a container and a food processor to solve the technical problems of inconvenient cleaning and low safety of the traditional mixing devices.

To achieve the above objective, a rotation head includes:
a sleeve provided with an axial through hole, an inner wall of the axial through hole being formed with a first locking inclined plane;
a locking cap provided with an insertion hole at a first end and an opening at a second end, the second end of the locking cap being slidably sleeved outside the sleeve;
a resilient element having one end abutting an inner wall of the first end of the locking cap, and the other end abutting a first end of the sleeve, the resilient element being configured to exert pressure on the sleeve when the locking cap moves towards the sleeve; and
a rotation actuator installed outside the sleeve.

In an embodiment, the locking cap is provided at an opening thereof with a first limit portion extending inwardly, the first end of the sleeve is provided with a second limit portion extending outwardly, and the first limit portion is configured to be in contact and fit with the second limit portion.

In an embodiment, the first limit portion expands outwardly in a direction away from the first end of the locking cap, and the second limit portion expands outwardly in a direction toward a second end of the sleeve.

In an embodiment, the inner wall of the first end of the locking cap is provided with a guide post extending toward the second end of the locking cap, and the guide post is configured to guide the resilient element to stretch and retract along the axial direction of the guide post.

In an embodiment, the guide post and the insertion hole are both coaxial with the locking cap, and the insertion hole axially penetrates the guide post.

In an embodiment, the axial through hole includes a vertical hole, an adjustment hole, and a locking hole that sequentially communicate from the first end of the sleeve to the second end of the sleeve, the first locking inclined plane is formed on an inner wall of the locking hole, and the vertical hole has a cross-sectional size not greater than a minimum cross-sectional size of the locking hole and the adjustment hole.

In an embodiment, the inner wall of the locking hole is formed with a drive portion for matching in a transmission manner with a drive shaft to be assembled.

In an embodiment, the drive portion is a vertical plane, a polygon prism structure, a raised structure or a recessed structure.

The rotation actuator is provided with a non-circular through hole for inserting the sleeve, an outer wall of the sleeve is formed with a transmission portion for matching with the non-circular through hole; the second end of the sleeve is provided with a third limit portion extending outwardly, the outer wall of the sleeve is provided in the middle thereof with a fourth limit portion extending outwardly, and the rotation actuator is sleeved between the third limit portion and the fourth limit portion.

In an embodiment, the third limit portion expands outward along a direction toward the first end of the sleeve.

In an embodiment, the rotation actuator includes at least one of a rotary knife, a rotary hook, a rotary claw, a rotary stick, and a rotary paddle.

In order to achieve the above-mentioned object, a rotation assembly includes a drive shaft and the above-mentioned rotation head; a side wall of the drive shaft is formed with a second locking inclined plane for mating with the first locking inclined plane, the second locking inclined plane expands outwardly in a direction toward the second end of the drive shaft; the drive shaft has a first end constructed with a locking portion, and when the locking cap is rotated at a certain angle, the locking cap is locked to the locking portion or is unlocked.

In an embodiment, in the case that the axial through hole includes a vertical hole, an adjustment hole, and a locking hole that sequentially communicate from the first end of the sleeve to the second end of the sleeve, the drive shaft includes a locking section and a vertical section connected in sequence, the second locking inclined plane is formed on a side wall of the locking section, and the vertical section is configured to match with the vertical hole.

In an embodiment, the locking hole has a length smaller than that of the locking section.

In an embodiment, the insertion hole of the locking cap is a strip-shaped hole, and the cross-sectional shape of the locking portion is adapted to the shape of the insertion hole.

In order to achieve the above objective, the present invention also provides a container, including a container body and a rotation assembly. The rotation assembly is the rotation assembly as defined in claim 1-11. The second end of the drive shaft is fixed at a bottom of the container body, and the first end of the drive shaft penetrates the sleeve and the locking cap in sequence.

In order to achieve the above objective, the present invention also provides a food processor, including the above-mentioned container, and the container is a soymilk machine, a wall breaker, a juicer, a whisk, a dough mixer, a food blender, an air fryer, a chopper, a grater, an automatic cooking pot, a frying pan, a soup maker or an automatic frying pan.

In the rotation head, a first locking inclined plane is provided on the inner wall of the sleeve, and a locking cap equipped with a spring is sleeved and installed outside the sleeve, so that the first locking inclined plane of the sleeve is pushed to clamp the drive shaft by an elastic force generated due to the compression and deformation of the resilient element when the locking cap moves toward the sleeve. When the locking cap moves away from the sleeve, the elastic force of the resilient element disappears, and the sleeve may be directly pulled out from the drive shaft. Therefore, the rotation head has a simple structure, is easy to disassemble and clean, and has high safety. In addition, the rotation head may be used as a whole during disassembly and assembly, and there are no other redundant parts, which not only avoids the situation that one or more parts are forgotten, but also requires no disassembly and assembly tools during the entire disassembly and assembly process. After disassembly, the user does not need to check whether the disassembly and assembly are in place.

In the rotation assembly, the above-mentioned rotation head is adopted, a side wall of the drive shaft is provided with a second locking inclined plane for matching with the first locking inclined plane, and the drive shaft has a first end provided with a locking portion, so that when the locking cap moves a certain distance toward the sleeve, the locking cap may be locked by the locking portion and then the first locking inclined plane of the sleeve is pushed to clamp the second locking inclined plane of the drive shaft by an elastic force generated due to the compression and deformation of the resilient element. When it needs to be disassembled, the locking effect of the locking portion on the locking cap may be released by rotating the locking cap, and the sleeve may be directly pulled out from the drive shaft. It can be seen that the rotation assembly has a simple structure, is easy to disassemble and clean, and has high safety. The rotation head and the drive shaft may be disassembled and assembled quickly. In addition, the rotation head may be used as a whole during disassembling and assembling on the drive shaft, and there are no other redundant parts, which not only avoids the situation that one or more parts are forgotten, but also requires no disassembly and assembly tools during the entire disassembly and assembly process. After disassembly, the user does not need to check whether the disassembly and assembly are in place.

The container adopts the above-mentioned rotation assembly, and the food processor adopts the above-mentioned container to independently clean the rotation head and the container, which can not only thoroughly clean the container and avoid the accumulation of residues on the bottom of the container, especially around the drive shaft, but also improve the safety and avoid scratching the user by the rotation head during the cleaning of the container.

### BRIEF DESCRIPTION OF THE DRAWINGS

In order to more clearly illustrate the technical solutions in the embodiments of the present invention or the prior art, the drawings needed in the descriptions of the embodiments or the prior art will be briefly described below. The drawings in the following description are only some embodiments of the present invention.
FIG. 1 is a schematic longitudinal sectional view of a sleeve installed with a rotation actuator according to Embodiment 1 of the present invention;
FIG. 2 is a schematic longitudinal sectional view of a locking cap installed with a resilient element according to Embodiment 1 of the present invention;
FIG. 3 is a schematic longitudinal sectional view of a rotation head according to Embodiment 1 of the present invention;
FIG. 4 is a schematic longitudinal sectional view of a sleeve according to Embodiment 1 of the present invention;
FIG. 5 is a schematic bottom view of a sleeve according to Embodiment 1 of the present invention;
FIG. 6 is a schematic longitudinal sectional view of a locking cap according to Embodiment 1 of the present invention;
FIG. 7 is a schematic longitudinal sectional view of a rotation assembly when a locking cap is not locked to a locking portion according to Embodiment 2 of the present invention;
FIG. 8 is a schematic longitudinal sectional view of a rotation assembly when a locking cap is locked to a locking portion according to Embodiment 2 of the present invention; and
FIG. 9 is a schematic longitudinal sectional view of a drive shaft according to Embodiment 2 of the present invention.

Reference numerals:
1 sleeve; 1.1 axial through hole; 1.1.1 vertical hole; 1.1.2 adjustment hole;
1.1.3 locking hole; 1.1.3.1 first locking inclined plane; 1.2 second limit portion;
1.3 third limit portion; 1.4 fourth limit portion; 2 locking cap; 2.1 insertion hole;
2.2 opening; 2.3 first limit portion; 2.4 guide post; 3 rotation actuator;
4 drive shaft; 4.1 locking portion; 4.2 vertical section; 4.3 locking section;
4.3.1 second locking inclined plane; 5 resilient element; 6 gap.

### DETAILED DESCRIPTION

In order to make the objectives, technical solutions and advantages of the present invention more clear, the technical solutions in the present invention will be clearly described in the following in conjunction with the accompanying drawings in the present invention. The described embodiments are a part of the embodiments of the present invention. and not all of the embodiments.

In the description of the present invention, unless otherwise specified, the orientations or positional relationships indicated by terms such as "upper", "lower", "inner", and "outer" are based on the orientation or positional relationship shown in the drawings, and are merely for the convenience of describing the present invention and simplifying the description, rather than indicating or implying that the device or element stated must have a particular orientation, is constructed and operated in a particular orientation, and thus is not to be construed as limiting the invention.

It should be noted that unless explicitly stated and defined otherwise, the term "connected" shall be understood broadly, for example, it may be fixedly connected, detachably connected, or integrally connected; it may be directly connected, or indirectly connected through an intermediate medium. The specific meanings of the terms above in the present invention can be understood by a person skilled in the art in accordance with specific conditions.

### Embodiment 1

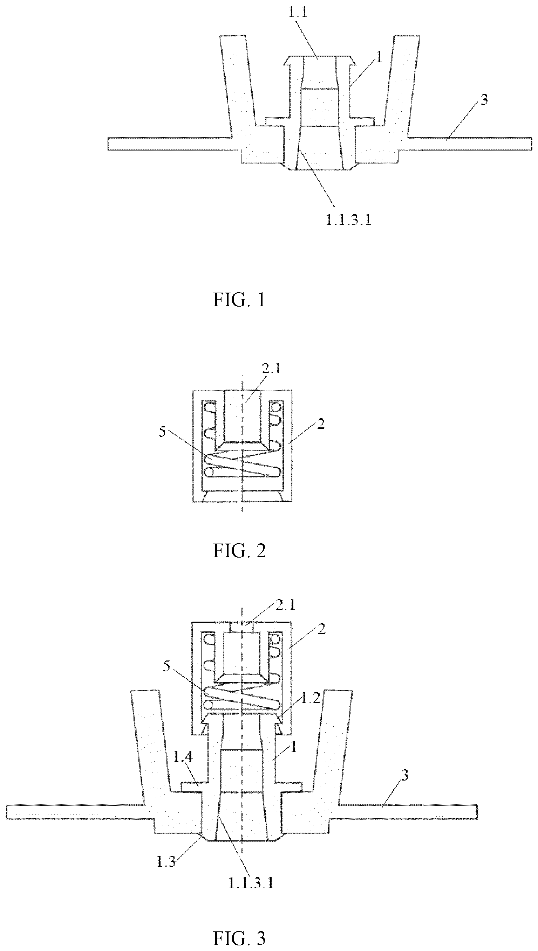

In conjunction with FIGS. 1 to 6, the present embodiment provides a rotation head including a sleeve 1, a locking cap 2, a resilient element 5, and a rotation actuator 3, wherein the sleeve 1 is provided with an axial through hole 1.1, an inner wall of the axial through hole 1.1 is formed with a first locking inclined plane 1.1.3.1; the locking cap 2 is provided with an insertion hole 2.1 at a first end and an opening 2.2 at a second end, and the second end of the locking cap 2 is slidably sleeved outside the sleeve 1; the resilient element 5 has one end abutting an inner wall of the first end of the locking cap 2, and the other end abutting a first end of the sleeve 1, the resilient element 5 is configured to exert pressure on the sleeve 1 when the locking cap 2 moves towards the sleeve 1, and the rotation actuator 3 is installed outside the sleeve 1.

When the rotation head is assembled and installed, first, as shown in FIG. 1, the rotation actuator 3 is installed on an outer wall of the sleeve 1; then, as shown in FIG. 2, the resilient element 5 is placed in the locking cap 2; and the resilient element 5 may be, but is not limited to, a spring. Taking the spring as an example, the specific placement method of the spring in the locking cap 2 is described below. Method 1: when the spring has a diameter larger than that of a corresponding section of the drive shaft for matching with the rotation head, the spring and the insertion hole 2.1 of the locking cap 2 are disposed coaxially, that is, the spring will be sleeved on the drive shaft after the drive shaft passes through the locking cap 2; Method 2, when the spring has a diameter much smaller than that of a corresponding section of the drive shaft for matching with the rotation head, a plurality of springs may be disposed, and the plurality of springs are distributed in the locking cap 2 in an annular shape around the axis of the insertion hole 2.1, that is, after the drive shaft passes through the locking cap 2, the respective springs are sequentially distributed outside the drive shaft along the circumferential direction of the drive shaft. Then, as shown in FIG. 3, the second end of the locking cap 2 is sleeved on the sleeve 1. At this time, one end of the spring located in the locking cap 2 abuts the first end of the locking cap 2, and the other end of the spring abuts the first end of the sleeve 1. Finally, the entire rotation head is inserted on the drive shaft, and the first locking inclined plane 1.1.3.1 of the sleeve 1 is pushed to clamp the drive shaft by an elastic force generated due to the compression and deformation of the resilient element 5 when the locking cap 2 moves toward the sleeve 1.

When the rotation head is disassembled, first, the entire rotation head is pulled out from the drive shaft; then, the locking cap 2 is pulled out from the sleeve 1; finally, the resilient element 5 is taken out from the locking cap 2.

From the above, in the rotation head in the present embodiment, a first locking inclined plane 1.1.3.1 is provided on the inner wall of the sleeve 1, and a locking cap 2 equipped with a spring is sleeved and installed outside the sleeve 1, so that the first locking inclined plane 1.1.3.1 is pushed to clamp the drive shaft by an elastic force generated due to the compression and deformation of the resilient element 5 when the locking cap 2 moves toward the sleeve 1. When the locking cap 2 moves away from the sleeve 1, the resilient element 5 returns to its original state and no longer exerts pressure on the sleeve 1, the sleeve 1 may be directly pulled out from the drive shaft at this time. Therefore, the rotation head in the present embodiment has a simple structure, is easy to disassemble and clean, and has high safety. In addition, the rotation head may be used as a whole during disassembly and assembly, and there are no other redundant parts, which not only avoids the situation that one or more parts are forgotten, but also requires no disassembly and assembly tools during the entire disassembly and assembly process. After disassembly, the user does not need to check whether the disassembly and assembly are in place.

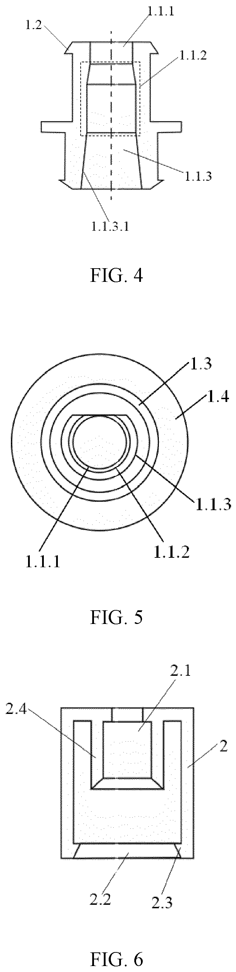

Further, in order to prevent the locking cap 2 from detaching from the sleeve 1 when the locking cap 2 slides in a direction away from the sleeve 1, as shown in FIGS. 4 to 6, the locking cap 2 is provided at an opening thereof with a first limit portion 2.3 extending inwardly, the first end of the sleeve 1 is provided with a second limit portion 1.2 extending outwardly, and the first limit portion 2.3 is configured to be in contact and fit with the second limit portion 1.2. It should be noted that the "inwardly" mentioned here means that taking the center of the locking cap 2 as a reference, a direction approaching the center of the locking cap 2 is inward, and on the contrary, the direction away from the center of the locking cap 2 is outward. At the same time, the "outwardly" mentioned here means that taking the center of the sleeve 1 as a reference, a direction away from the center of the sleeve 1 is outward, and on the contrary, the direction approaching the center of the sleeve 1 is inward. In an embodiment, the first limit portion 2.3 may be an annular boss formed on the inner wall of the locking cap 2, or may be a plurality of protrusions formed on the inner wall of the locking cap 2 and disposed at intervals along the circumferential direction of the locking cap 2. Of course, the first limit portion 2.3 may also be formed by bending the edge of the second end of the locking cap 2 inwardly. In the same way, the second limit portion 1.2 may be an annular boss formed on the outer wall of the sleeve 1, or may be a plurality of protrusions formed on the outer wall of the sleeve 1 and disposed at intervals along the circumferential direction of the sleeve 1. Of course, the second limit portion 1.2 may also be formed by bending the edge of the first end of the sleeve 1 outwardly. It should be noted that the first limit portion 2.3 and the second limit portion 1.2 of the above structure do not constitute a limitation to the protection scope of the present invention.

Further, the first limit portion 2.3 expands outwardly in a direction away from the first end of the locking cap 2, that is, the cross-sectional size of the opening 2.2 of the locking cap 2 at the first limit portion 2.3 gradually increases along the direction away from the first end of the locking cap 2; and the second limit portion 1.2 expands outwardly in a direction toward a second end of the sleeve 1, that is, the cross-sectional size of the second limit portion 1.2 gradually increases along the direction toward the second end of the sleeve 1. The advantages of this arrangement lie in: on the one hand, when the opening 2.2 of the locking cap 2 is aligned with the first end of the sleeve 1, the large end of the first limit portion 2.3 is opposite to the small end of the second limit portion 1.2, so that the first end of the sleeve 1 may be inserted into the locking cap 2 as long as pressing the locking cap 2 down with a slight force; on the other hand, when the first limit portion 2.3 and the second limit portion 1.2 are in contact and fit with each other, the large end of the second limit portion 1.2 just abuts the small end of the first limit portion 2.3, the contact area between the first limit portion 2.3 and the second limit portion 1.2 is relatively large, and the first limit portion 2.3 is not easy to cross the second limit portion 1.2, and high reliability is provided.

In addition, as shown in FIG. 2, in order to prevent the resilient element 5 from being twisted during the elastic deformation process when the locking cap 2 moves toward the sleeve 1, the inner wall of the first end of the locking cap 2 is provided with a guide post 2.4 extending toward the second end of the locking cap 2. The guide post 2.4 is configured to guide the resilient element 5 to stretch and retract along the axial direction of the guide post 2.4. In an embodiment, the resilient element 5 may be sleeved outside the guide post 2.4 or may be inserted inside the guide post 2.4. For example, when both the guide post 2.4 and the insertion hole 2.1 are coaxial with the locking cap 2, and the insertion hole 2.1 penetrates the guide post 2.4 axially, if the insertion hole 2.1 is a stepped hole and the larger end of the stepped hole is located inside the guide post 2.4, the resilient element 5 may be inserted into the guide post 2.4 and abutted against the step surface of the insertion hole 2.1. Of course, the resilient element 5 may also be directly sleeved outside the guide post 2.4.

In an embodiment, the axial through hole 1.1 of the sleeve 1 includes a vertical hole 1.1.1, an adjustment hole 1.1.2, and a locking hole 1.1.3 that sequentially communicate from the first end of the sleeve 1 to the second end of the sleeve 1, the first locking inclined plane is formed on an inner wall of the locking hole 1.1.3, and the vertical hole 1.1.1 has a cross-sectional size not greater than a minimum cross-sectional size of the locking hole 1.1.3 and the adjustment hole 1.1.2. This arrangement is intended to take into account that some drive shafts are usually composed of multiple shaft sections with different shapes. For example, the drive shaft includes a vertical section and a locking section connected in sequence, wherein an outer wall of the locking section has a second locking inclined plane for matching with the first locking inclined plane 1.1.3.1, the second locking inclined plane expands outwardly along a direction away from the vertical section, and the vertical section has a cross-sectional size not greater than the minimum cross-sectional size of the locking section. In this case, if the axial through hole 1.1 of the sleeve 1 only has a vertical hole 1.1.1 for matching with the vertical section and a locking hole 1.1.3 for matching with the locking section, then, after the sleeve 1 is sleeved on the drive shaft, the connection between the vertical hole 1.1.1 and the locking hole 1.1.3 just abuts the connection between the vertical section and the locking section. Since the second locking inclined plane expands outwardly in the direction away from the vertical section, the entire sleeve 1 would not be able to move downwards under the constraint of the second locking inclined plane, that is, the first locking inclined plane 1.1.3.1 would not be able to clamp the second locking inclined plane. Therefore, in order to avoid the above situation, the adjustment hole 1.1.2 is also disposed between the vertical hole 1.1.1 and the locking hole 1.1.3 in the present embodiment, so that after the sleeve 1 is sleeved on the drive shaft, the vertical hole 1.1.1 matches with the vertical section, the locking hole 1.1.3 matches with the locking section, and the adjustment hole 1.1.2 is just sleeved on the outside of the connection between the vertical section and the locking section. Since the vertical hole 1.1.1 has a cross-sectional size not greater than the minimum cross-sectional size of the locking hole 1.1.3 and the adjustment hole 1.1.2, the cross-sectional size of the connection between the vertical section and the locking section is smaller than the cross-sectional size of the adjustment hole 1.1.2, that is, a gap is reserved between the adjustment hole 1.1.2 and the outer wall of the drive shaft. Due to the presence of the gap, the sleeve 1 may move downward relative to the drive shaft, so that the first locking inclined plane 1.1.3.1 clamps the second locking inclined plane of the drive shaft.

It should be noted that the adjustment hole 1.1.2 may be a combination of a tapered hole and a cylindrical hole, or a tapered hole or an irregularly-shaped hole. For example, as shown in FIG. 4, the adjustment hole 1.1.2 includes a tapered hole and a cylindrical hole, the small end of the tapered hole communicates with the vertical hole 1.1.1, and the large end of the tapered hole communicates with the locking hole 1.1.3 through the cylindrical hole.

Further, in order to further ensure that the sleeve 1 and the drive shaft will not rotate relative to each other and improve the reliability of transmission, the inner wall of the locking hole 1.1.3 is formed with a drive portion for matching in a transmission manner with a drive shaft to be assembled, and the drive portion is a vertical plane, a polygon prism structure, a raised structure or a recessed structure formed on the inner wall of the locking hole 1.1.3. Due to the presence of the drive portion, the inner wall of the locking hole 1.1.3 is a non-circular surface. After being inserted into the locking hole 1.1.3 of the sleeve 1, the drive assembly is constrained by the non-circular surface, and no relative rotation occurs between the sleeve 1 and the drive shaft, that is, the sleeve 1 will rotate synchronously with the drive shaft without other additional fastening parts. It should be noted that the drive portion may be disposed at any position on the inner wall of the locking hole 1.1.3. For example, the drive portion is a polygon prism structure formed on the entire inner wall of the locking hole 1.1.3, that is, at this time, the locking hole 1.1.3 is a prismatic hole. Of course, the drive portion may also be a vertical plane, a raised structure or a recessed structure arranged opposite to the first locking inclined plane 1.1.3.1. It should be noted that the drive portion of the above structure does not constitute a limitation to the protection scope of the present invention.

In an embodiment, the rotation actuator 3 is provided with a non-circular through hole for inserting the sleeve 1, the outer wall of the sleeve 1 is formed with a transmission portion for matching with the non-circular through hole; the second end of the sleeve 1 is provided with a third limit portion 1.3 extending outwardly, the outer wall of the sleeve 1 is provided in the middle thereof with a fourth limit portion 1.4 extending outwardly, and the rotation actuator 3 is sleeved between the third limit portion 1.3 and the fourth limit portion 1.4. The "outwardly" mentioned here means that taking the center of the sleeve 1 as a reference, a direction away from the center of the sleeve 1 is outward, and on the contrary, the direction approaching the center of the sleeve 1 is inward. In an embodiment, the shape of the non-circular through hole may be, but is not limited to, a semicircle, a rounded rectangle or a polygon. The advantages of this arrangement lie in: on the one hand, because the mounting hole of the rotation actuator 3 is a non-circular through hole, and the outer wall of the sleeve 1 is provided with a corresponding transmission portion, the sleeve 1 is constrained by the non-circular surface after being inserted into the non-circular through hole of the rotation actuator 3, and no relative rotation occurs between the rotation actuator 3 and the sleeve 1, that is, the rotation actuator 3 will rotate synchronously with the sleeve 1 without additional fastening parts; on the one hand, due to the presence of the third limit portion 1.3, after the rotation actuator 3 is installed on the sleeve 1, the rotation actuator 3 and the sleeve 1 may be disassembled and assembled together as a whole. Meanwhile, due to the presence of the fourth limit portion 1.4, the axial position of the rotation actuator 3 on the sleeve 1 may be ensured, avoiding the non-circular through hole of the rotation actuator 3 matching only with the transmission portion of the sleeve 1.

Further, in order to facilitate the disassembly and assembly of the rotation actuator 3, the third limit portion 1.3 expands outward along the direction toward the first end of the sleeve 1, that is, the cross-sectional dimension of the third limit portion 1.3 gradually increases along the direction toward the first end of the sleeve 1. The "outwardly" mentioned here means that taking the center of the sleeve 1 as a reference, a direction away from the center of the sleeve 1 is outward, and on the contrary, the direction approaching the center of the sleeve 1 is inward. Therefore, when the non-circular through hole of the rotation actuator 3 matches with the transmission portion of the sleeve 1, the large end of the third limit portion 1.3 will abut on the surface of the rotation actuator 3. At this time, the third limit portion 1.3 and the rotation actuator 3 has a large contact area and high reliability is provided. In addition, in order to improve the reliability of the fourth limit portion 1.4, the outward extending length of the fourth limit portion 1.4 may be much greater than the outward extending length of the third limit portion 1.3. Since the locking cap 2 is in a clearance fit with the sleeve 1 during the process in which the locking cap 2 slides along the sleeve 1, in order to ensure that the first limit portion 2.3 can abut against the outer wall of the sleeve 1 and avoid the occurrence of shaking during the sliding process of the locking cap 2, outer diameters of the parts of the sleeve 1 between the first end and the fourth limit portion 1.4 are equal.

It should be noted that the rotation actuator 3 in the present embodiment includes at least one of a rotary knife, a rotary hook, a rotary claw, a rotary stick, and a rotary paddle. Among them, the rotary hook is often used in dough mixers, paint mixing devices, a pretreatment system for crop fermentation raw materials, powder paint mixers, etc.; the rotary claw is often used in super-hard abrasive mixers, whisks, cooking machines, biological fertilizer mixers, etc.; the rotary stick is often used in reactors, cooking machines, etc.; and the rotary blade is often used in mixers, reactors, etc..

### Embodiment 2

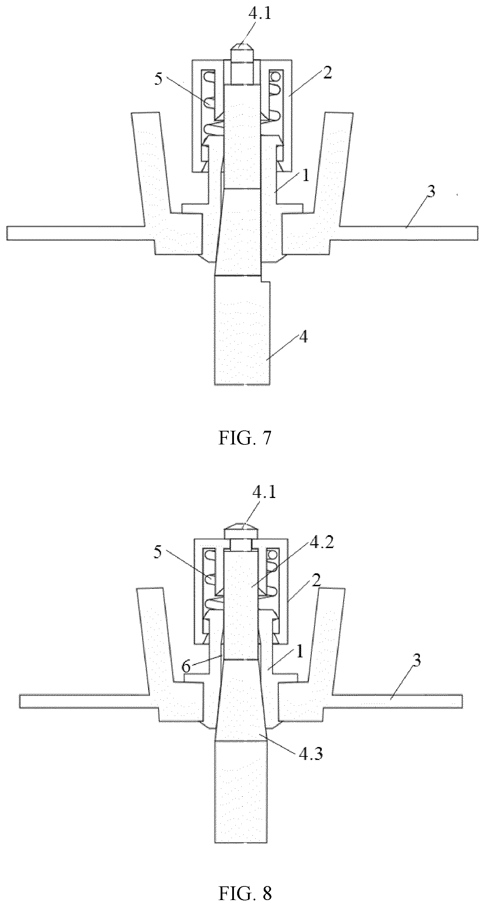

In conjunction with FIGS. 7-9, the present embodiment also provides a rotation assembly, including a drive shaft 4 and the above-mentioned rotation head; a side wall of the drive shaft 4 is formed with a second locking inclined plane 4.3.1 for matching with a first locking inclined plane 1.1.3.1, the second locking inclined plane 4.3.1 expands outwardly in the direction toward the second end of the drive shaft 4, that is, the cross-sectional size of the drive shaft 4 at the second locking inclined plane 4.3.1 gradually increases along the direction away from the first end of the drive shaft 4; the first end of the drive shaft 4 is constructed with a locking portion 4.1, and after the locking cap 2 is rotated at a certain angle, the locking cap 2 is locked to the locking portion 4.1 or is unlocked. The "outwardly" mentioned here means that taking the center of the drive shaft 4 as a reference, a direction away from the center of the drive shaft 4 is outward, and on the contrary, the direction approaching the center of the drive shaft 4 is inward.

The structure and principle of the rotation head in the present embodiment are the same as those in Embodiment 1, and will not be repeated in the present embodiment.

When the rotation assembly is assembled: first, the axial through hole 1.1 of the sleeve 1 is aligned with the first end of the drive shaft 4 and then the entire rotation head is moved downwards until the locking portion 4.1 of the drive shaft 4 abuts the first end of the locking cap 2; then, as shown in FIG. 7, the locking cap 2 is turned until the insertion hole 2.1 of the locking cap 2 may pass through the locking portion 4.1, and the locking cap 2 is pressed downward to move toward the sleeve 1; finally, as shown in FIG. 8, when the locking portion 4.1 protrudes out of the locking cap 2, the locking cap 2 continues to be pressed and is turned again until the insertion hole 2.1 of the locking cap 2 cannot pass through the locking portion 4.1, that is, the locking cap 2 is locked to the locking portion 4.1, and then the pressing and turning are stopped. Since the resilient element 5 is continuously compressed and deformed during the movement of the locking cap 2 toward the sleeve 1, at this time, the locking cap 2 may synchronously move together with the drive shaft 4 under the combined action of the constraint of the locking portion 4.1 and the elastic force of the resilient element 5, that is, the locking cap 2 will neither move axially relative to the drive shaft 4 nor rotate relative to the drive shaft 4. At the same time, because the side wall of the drive shaft 4 is formed with a second locking inclined plane 4.3.1 for matching with the first locking inclined plane 1.1.3.1, and the second locking inclined plane 4.3.1 is inclined downward along a direction facing the second end of the drive shaft, when the locking cap 2 is locked to the locking portion 4.1, the sleeve 1 will move towards the second end of the drive shaft 4 under the pushing effect of the elastic force of the resilient element 5 until the first locking inclined plane 1.1.3.1 clamps the second locking inclined plane 4.3.1. At this time, the entire rotation head is installed on the drive shaft 4 and may rotate synchronously with the drive shaft 4.

When the rotation assembly is disassembled, the locking cap 2 is first pressed down and turned until the insertion hole 2.1 of the locking cap 2 may pass through the locking portion 4.1, that is, when the locking cap 2 is unlocked, the pressing and turning are stopped. At this time, under the driving of the elastic force of the resilient element 5, the locking cap 2 moves in the direction away from the sleeve 1, and the insertion hole 2.1 of the locking cap 2 passes through the locking portion 4.1; and finally the entire rotation head is pulled out from the drive shaft 4.

From the above, in the rotation assembly in the present embodiment, the above-mentioned rotation head is adopted, a side wall of the drive shaft 4 is formed with a second locking inclined plane 4.3.1 for matching with the first locking inclined plane 1.1.3.1, and the drive shaft 4 has a first end configured with a locking portion 4.1, so that when the locking cap 2 moves a certain distance toward the sleeve 1, the locking cap 2 is locked by the locking portion 4.1 and then the first locking inclined plane 1.1.3.1 of the sleeve 1 is pushed to clamp the second locking inclined plane 4.3.1 of the drive shaft 4 by an elastic force generated due to the compression and deformation of the resilient element 5. When it needs to be disassembled, the locking of the locking portion 4.1 on the locking cap 2 is released by turning the locking cap 2, and the insertion hole 2.1 of the locking cap 2 will pass through the locking portion 4.1 driven by the elastic force of the resilient element 5, and then the rotation head may be directly pulled out from the drive shaft 4. It can be seen that the rotation assembly in the present embodiment has a simple structure, is easy to disassemble and clean, and has high safety. The rotation head and the drive shaft 4 may be disassembled and assembled quickly. Also, the rotation head may be used as a whole during disassembling and assembling on the drive shaft 4, and there are no other redundant parts, which not only avoids the situation that one or more parts are forgotten, but also requires no disassembly and assembly tools during the entire disassembly and assembly process. After disassembly, the user does not need to check whether the disassembly and assembly are in place.

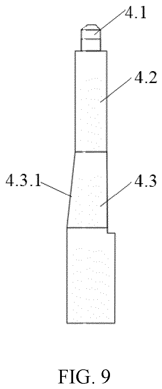

Further, in the case that the axial through hole 1.1 includes a vertical hole 1.1.1, an adjustment hole 1.1.2, and a locking hole 1.1.3 that sequentially communicate from the first end of the sleeve 1 to the second end of the sleeve 1, as shown in FIG. 9, the drive shaft 4 includes a locking section 4.3 and a vertical section 4.2 connected in sequence, the second locking inclined plane 4.3.1 is formed on the side wall of the locking section 4.3, and the vertical section 4.2 is configured to match with the vertical hole 1.1.1. Therefore, after the sleeve 1 is sleeved on the drive shaft 4, the vertical hole 1.1.1 matches with the vertical section 4.2, the adjustment hole 1.1.2 is just sleeved outside the connection between the vertical section 4.2 and the locking section 4.3, and the locking hole 1.1.3 matches with the locking section 4.3. Since the vertical hole 1.1.1 has a cross-sectional size smaller than the minimum cross-sectional size of the locking hole 1.1.3 and the adjustment hole 1.1.2, a gap 6 is reserved between the adjustment hole 1.1.2 and the outer wall of the drive shaft 4. With the presence of the gap 6, the sleeve 1 may move toward the second end of the drive shaft 4 under the driving of the resilient element 5, and then the first locking inclined plane 1.1.3.1 and the second locking inclined plane 4.3.1 may be clamped tightly.

In addition, considering that the sleeve 1 will move relative to the drive shaft 4 when the rotation head is installed, in order to prevent the second end of the sleeve 1 from exceeding the locking section 4.3 after the assembly is completed, resulting in a gap created between the locking hole 1.1.3 and the drive shaft 4, which in turn causes the material to enter the gap during the working process of the rotation assembly, in the embodiment, the locking hole 1.1.3 has a length smaller than that of the locking section 4.3.

In an embodiment, the insertion hole 2.1 of the locking cap 2 is a strip-shaped hole, and the cross-sectional shape of the locking portion 4.1 is adapted to the shape of the insertion hole 2.1. That is, shapes of the locking portion 4.1 and the strip-shaped hole are the same, and the size of the locking portion 4.1 is equal to or slightly smaller than that of the strip-shaped hole.

Therefore, in the case that the locking portion 4.1 is out of the locking cap 2, if it needs to release the locking of the locking portion 4.1 on the locking cap 2, the locking cap 2 is turned so that an included angle between the length direction of the insertion hole 2.1 and the length direction of the locking portion 4.1 gradually decreases. When the length direction of the insertion hole 2.1 is parallel to the length direction of the locking portion 4.1, that is, when the full projection of the locking portion 4.1 on the locking cap 2 is within the insertion hole 2.1, the locking effect of the locking portion 4.1 on the locking cap 2 is released, and the insertion hole 2.1 of the locking cap 2 may pass through the locking portion 4.1 under the driving of the resilient element 5 and move in a direction away from the sleeve 1. If the locking cap 2 is to be locked to the locking portion 4.1, the locking cap 2 is turned to gradually increase the included angle between the length direction of the insertion hole 2.1 and the length direction of the locking portion 4.1. When the length direction of the insertion hole 2.1 is not parallel to the length direction of the locking portion 4.1, for example, the length direction of the insertion hole 2.1 is perpendicular to the length direction of the locking portion 4.1, that is, when the projection of the locking portion 4.1 on the locking cap 2 and the insertion hole 2.1 form a "cross", the locking cap 2 is locked to the locking portion 4.1. It should be noted that the insertion hole 2.1 of the locking cap 2 may be, but is not limited to, a strip-shaped hole, for example, a triangular hole, a semicircular hole, and the like.

### Embodiment 3

The present embodiment provides a container including a container body and a rotation assembly. The rotation assembly is the above-mentioned rotation assembly. The second end of the drive shaft 4 is fixed at the bottom of the container body and the first end of the drive shaft 4 penetrates the sleeve 1 and the locking cap 2 in sequence. The structure and principle of the rotation assembly in the present embodiment are the same as those in Embodiment 2, and will not be repeated in the present embodiment. It can be seen that by adopting the above-mentioned rotation assembly, the container in the present embodiment may independently clean the rotation head and the container, which can not only thoroughly clean the container and avoid the accumulation of residues on the bottom of the container, especially around the drive shaft 4, but also improve the safety and avoid scratching the user by the rotation head during the cleaning of the container.

The present embodiment also provides a food processor including the container described above. In an embodiment, the container may be, but not limited to, a soymilk machine, a wall breaker, a juicer, a whisk, a dough mixer, a food blender, an air fryer, a chopper, a grater, an automatic cooking pot, a frying pan, a soup maker or an automatic frying pan. The food processor in the present invention adopts the above-mentioned container to independently clean the rotation head and the container, which can not only thoroughly clean the container and avoid the accumulation of residues on the bottom of the container, especially a place of the bottom close to the drive shaft 4, but also improve the safety and avoid scratching the user by the rotation head during the cleaning of the container.

## Claims

1. A rotation assembly, comprising a drive shaft (4) and a rotation head;
wherein the rotation head comprises:
a sleeve (1) provided with an axial through hole (1.1), an inner wall of the axial through hole (1.1) being formed with a first locking inclined plane (1.1.3.1);
a locking cap (2) provided with an insertion hole (2.1) at a first end and an opening (2.2) at a second end, the second end of the locking cap (2) being slidably sleeved outside the sleeve (1);
a resilient element (5) having one end abutting an inner wall of the first end of the locking cap (2), and the other end abutting a first end of the sleeve (1), the resilient element (5) being configured to exert pressure on the sleeve (1) when the locking cap (2) moves towards the sleeve (1);
a rotation actuator (3) installed outside the sleeve (1); wherein
the rotation actuator (3) is provided with a non-circular through hole for inserting the sleeve (1), an outer wall of the sleeve (1) is formed with a transmission portion for matching with the non-circular through hole, a second end of the sleeve (1) is provided with a third limit portion (1.3) extending outwardly, the outer wall of the sleeve (1) is provided in the middle thereof with a fourth limit portion (1.4) extending outwardly, and the rotation actuator (3) is sleeved between the third limit portion (1.3) and the fourth limit portion (1.4); and
in use, the first locking inclined plane (1.1.3.1) of the sleeve (1) is pushed to clamp the drive shaft (4) to be assembled, by an elastic force generated due to the compression and deformation of the resilient element (5) when the locking cap (2) moves toward the sleeve (1);
wherein a side wall of the drive shaft (4) is formed with a second locking inclined plane (4.3.1) for matching with the first locking inclined plane (1.1.3.1); the second locking inclined plane (4.3.1) expands outwardly in a direction toward a second end of the drive shaft (4); the drive shaft (4) has a first end constructed with a locking portion (4.1), and when the locking cap (2) is rotated at a certain angle, the locking cap (2) is locked to the locking portion (4.1) or is unlocked.

2. The rotation assembly of claim 1, wherein the locking cap (2) is provided at the opening (2.2) thereof with a first limit portion (2.3) extending inwardly, the first end of the sleeve (1) is provided with a second limit portion (1.2) extending outwardly, and the first limit portion is configured to be in contact and fit with the second limit portion (1.2).

3. The rotation assembly of claim 2, wherein the first limit portion (2.3) expands outwardly in a direction away from the first end of the locking cap (2), and the second limit portion (1.2) expands outwardly in a direction toward a second end of the sleeve (1).

4. The rotation assembly of claim 1, wherein the inner wall of the first end of the locking cap (2) is provided with a guide post (2.4) extending toward the second end of the locking cap (2), and the guide post (2.4) is configured to guide the resilient element (5) to stretch and retract along the axial direction of the guide post (2.4).

5. The rotation assembly of claim 4, wherein the guide post (2.4) and the insertion hole (2.1) are both coaxial with the locking cap (2), and the insertion hole (2.1) axially penetrates the guide post (2.4).

6. The rotation assembly of any one of claims 1 to 5, wherein the axial through hole (1.1) comprises a vertical hole (1.1.1), an adjustment hole (1.1.2), and a locking hole (1.1.3) that sequentially communicate from the first end of the sleeve (1) to the second end of the sleeve (1), the first locking inclined plane (1.1.3.1) is formed on an inner wall of the locking hole (1.1.3), and the vertical hole (1.1.1) has a cross-sectional size not greater than a minimum cross-sectional size of the locking hole (1.1.3) and the adjustment hole (1.1.2).

7. The rotation assembly of claim 6, wherein the inner wall of the locking hole (1.1.3) is formed with a drive portion for matching in a transmission manner with a drive shaft (4) to be assembled.

8. The rotation assembly of claim 7, wherein the drive portion is a vertical plane, a polygon prism structure, a raised structure or a recessed structure.

9. The rotation assembly of claims 1 to 5, wherein the third limit portion (1.3) expands outward along a direction toward the first end of the sleeve (1) or the rotation actuator comprises at least one of a rotary knife, a rotary hook, a rotary claw, a rotary stick, and a rotary paddle.

10. The rotation assembly of claims 1 to 9, wherein in the case that the axial through hole comprises a vertical hole (1.1.1), an adjustment hole (1.1.2), and a locking hole (1.1.3) that sequentially communicate from the first end of the sleeve (1) to the second end of the sleeve (1), the drive shaft (4) comprises a locking section (4.3) and a vertical section (4.2) connected in sequence, the second locking inclined plane (4.3.1) is formed on a side wall of the locking section (4.3), and the vertical section (4.2) is configured to match with the vertical hole (1.1.1), optionally, wherein the locking hole has a length smaller than that of the locking section (4.3).

11. The rotation assembly of claims 1 to 10, wherein the insertion hole (2.1) of the locking cap (2) is a strip-shaped hole, and the cross-sectional shape of the locking portion (4.1) is adapted to the shape of the insertion hole (2.1).

12. A container, comprising a container body and a rotation assembly, wherein the rotation assembly is the rotation assembly of any of claims 1 to 11, the second end of the drive shaft (4) is fixed at a bottom of the container body, and the first end of the drive shaft (4) penetrates the sleeve (1) and the locking cap (2) in sequence.

13. A food processor, comprising the container of claim 12, and the container is a soymilk machine, a wall breaker, a juicer, a whisk, a dough mixer, a food blender, an air fryer, a chopper, a grater, an automatic cooking pot, a frying pan, a soup maker or an automatic frying pan.

## Patentansprüche

1. Rotationsanordnung, umfassend eine Antriebswelle (4) und einen Rotationskopf, wobei der Rotationskopf Folgendes umfasst:
eine Hülse (1), die mit einer axialen Durchgangsöffnung (1.1) versehen ist, wobei eine Innenwand der axialen Durchgangsöffnung (1.1) mit einer ersten geneigten Arretierungsebene (1.1.3.1) gebildet ist,
eine Arretierungskappe (2), der an einem ersten Ende mit einer Einsetzöffnung (2.1) und an einem zweiten Ende mit einem Loch (2.2) versehen ist, wobei das zweite Ende der Arretierungskappe (2) gleitfähig außen auf die Hülse (1) gehülst ist,
ein elastisches Element (5), dessen eines Ende an einer Innenwand des ersten Endes der Arretierungskappe (2) anliegt und dessen anderes Ende an einem ersten Ende der Hülse (1) anliegt, wobei das elastische Element (5) dafür gestaltet ist, Druck auf die Hülse (1) auszuüben, wenn sich der Arretierungskappe (2) hin zur Hülse (1) bewegt,
einen Rotationsaktor (3), der außerhalb der Hülse (1) installiert ist, wobei
der Rotationsaktor (3) mit einer nicht kreisrunden Durchgangsöffnung zum Einsetzen der Hülse (1) versehen ist, wobei eine Außenwand der Hülse (1) mit einem Übertragungsabschnitt zum Zusammenpassen mit der nicht kreisrunden Durchgangsöffnung gebildet ist, ein zweites Ende der Hülse (1) mit einem dritten Begrenzungsabschnitt (1.3) versehen ist, der sich auswärts erstreckt, die Außenwand der Hülse (1) in ihrer Mitte mit einem vierten Begrenzungsabschnitt (1.4) versehen ist, der sich auswärts erstreckt, und der Rotationsaktor (3) zwischen dem dritten Begrenzungsabschnitt (1.3) und dem vierten Begrenzungsabschnitt (1.4) aufgehülst ist, und
die erste geneigte Arretierungsebene (1.1.3.1) der Hülse (1) während des Gebrauchs gedrückt wird, um die einzubauende Antriebswelle (4) durch eine elastische Kraft festzuklemmen, die durch das Komprimieren und Verformen des elastischen Elements (5) erzeugt wird, wenn sich die Arretierungskappe (2) hin zur Hülse (1) bewegt,
wobei eine Seitenwand der Antriebswelle (4) mit einer zweiten geneigten Arretierungsebene (4.3.1) zum Zusammenpassen mit der ersten geneigten Arretierungsebene (1.1.3.1) gebildet ist, wobei sich die zweite geneigte Arretierungsebene (4.3.1) auswärts in eine Richtung hin zu einem zweiten Ende der Antriebswelle (4) ausdehnt, die Antriebswelle (4) ein erstes Ende aufweist, das mit einem Arretierungsabschnitt (4.1) aufgebaut ist, und die Arretierungskappe (2) an dem Arretierungsabschnitt (4.1) arretiert oder gelöst wird, wenn die Arretierungskappe (2) um einem bestimmten Winkel gedreht wird.

2. Rotationsanordnung nach Anspruch 1, wobei die Arretierungskappe (2) an ihrem Loch (2.2) mit einem ersten Begrenzungsabschnitt (2.3) versehen ist, der sich einwärts erstreckt, das erste Ende der Hülse (1) mit einem zweiten Begrenzungsabschnitt (1.2) versehen ist, der sich auswärts erstreckt, und der erste Begrenzungsabschnitt derart gestaltet ist, dass er in Kontakt und Passung mit dem zweiten Begrenzungsabschnitt (1.2) steht.

3. Rotationsanordnung nach Anspruch 2, wobei sich der erste Begrenzungsabschnitt (2.3) auswärts in eine Richtung weg von dem ersten Ende der Arretierungskappe (2) ausdehnt und sich der zweite Begrenzungsabschnitt (1.2) auswärts in eine Richtung hin zu einem zweiten Ende der Hülse (1) ausdehnt.

4. Rotationsanordnung nach Anspruch 1, wobei die Innenwand des ersten Endes der Arretierungskappe (2) mit einer Führungsstange (2.4) versehen ist, der sich hin zum zweiten Ende der Arretierungskappe (2) erstreckt, und die Führungsstange (2.4) dafür gestaltet ist, das elastische Element (5) zu führen, sich entlang der axialen Richtung der Führungsstange (2.4) zu dehnen und zurückzuziehen.

5. Rotationsanordnung nach Anspruch 4, wobei sowohl die Führungsstange (2.4) als auch die Einsetzöffnung (2.1) koaxial mit der Arretierungskappe (2) liegen und die Einsetzöffnung (2.1) die Führungsstange (2.4) axial durchdringt.

6. Rotationsanordnung nach einem der Ansprüche 1 bis 5, wobei die axiale Durchgangsöffnung (1.1) eine vertikale Öffnung (1.1.1), eine Justierungsöffnung (1.1.2) und eine Arretierungsöffnung (1.1.3) umfasst, die vom ersten Ende der Hülse (1) zum zweiten Ende der Hülse (1) nacheinander verbunden sind, wobei die erste geneigte Arretierungsebene (1.1.3.1) an einer Innenwand der Arretierungsöffnung (1.1.3) gebildet ist und die vertikale Öffnung (1.1.1) eine Querschnittsgröße aufweist, die nicht größer als eine minimale Querschnittsgröße der Arretierungsöffnung (1.1.3) und der Justierungsöffnung (1.1.2) ist.

7. Rotationsanordnung nach Anspruch 6, wobei die Innenwand der Arretierungsöffnung (1.1.3) mit einem Antriebsabschnitt zum Zusammenpassen mit einer einzubauenden Antriebswelle (4) in einer übertragenden Weise gebildet ist.

8. Rotationsanordnung nach Anspruch 7, wobei der Antriebsabschnitt eine vertikale Ebene, eine Polygonprismenstruktur, eine erhabene Struktur oder eine vertiefte Struktur ist.

9. Rotationsanordnung nach Anspruch 1 bis 5, wobei sich der dritte Begrenzungsabschnitt (1.3) auswärts entlang einer Richtung zum ersten Ende der Hülse (1) ausdehnt oder der Rotationsaktor mindestens eines von einem Rotationsmesser, einem Rotationshaken, einer Rotationskralle, einem Rotationsstab und einem Rotationspaddel umfasst.

10. Rotationsanordnung nach Anspruch 1 bis 9, wobei die Antriebswelle (4) im Fall, dass die axiale Durchgangsöffnung eine vertikale Öffnung (1.1.1), eine Justierungsöffnung (1.1.2) und eine Arretierungsöffnung (1.1.3) umfasst, die vom ersten Ende der Hülse (1) zum zweiten Ende der Hülse (1) nacheinander verbunden sind, einen Arretierungsabschnitt (4.3) und einen vertikalen Abschnitt (4.2) umfasst, die nacheinander verbunden sind, die zweite geneigte Arretierungsebene (4.3.1) an einer Seitenwand des Arretierungsabschnitts (4.3) gebildet ist und der vertikale Abschnitt (4.2) derart gestaltet ist, dass er mit der vertikalen Öffnung (1.1.1) zusammenpasst, wobei optional die Arretierungsöffnung eine Länge aufweist, die geringer als die des Arretierungsabschnitts (4.3) ist.

11. Rotationsanordnung nach Anspruch 1 bis 10, wobei das Einsetzöffnung (2.1) der Arretierungskappe (2) eine streifenförmige Öffnung ist und die Querschnittsform des Arretierungsabschnitts (4.1) an die Form des Einsetzöffnung (2.1) angepasst ist.

12. Behälter, umfassend einen Behälterhauptteil und eine Rotationsanordnung, wobei die Rotationsanordnung die Rotationsanordnung nach einem der Ansprüche 1 bis 11 ist, das zweite Ende der Antriebswelle (4) an einem Boden des Behälterhauptteils befestigt ist und das erste Ende der Antriebswelle (4) die Hülse (1) und die Arretierungskappe (2) nacheinander durchdringt.

13. Nahrungsmittelverarbeitungseinrichtung, umfassend den Behälter nach Anspruch 12, wobei der Behälter eine Sojamilchmaschine, ein Hochleistungsmixer, ein Entsafter, ein Schaumschläger, eine Teigknetmaschine, ein Mixgerät, eine Heißluftfritteuse, ein Hacker, eine Reibe, ein automatischer Kochtopf, ein Bratpfanne, ein Suppenbereiter oder eine automatische Bratpfanne ist.

## Revendications

1. Ensemble de rotation, comportant un arbre d'entraînement (4) et une tête de rotation ;
dans lequel la tête de rotation comporte :
un manchon (1) doté d'un trou traversant axial (1.1), une paroi intérieure du trou traversant axial (1.1) étant formée avec un premier plan incliné de verrouillage (1.1.3.1) ;
un capuchon de verrouillage (2) doté d'un trou d'insertion (2.1) au niveau d'une première extrémité et d'une ouverture (2.2) au niveau d'une deuxième extrémité, la deuxième extrémité du capuchon de verrouillage (2) étant emmanchée de manière coulissante à l'extérieur du manchon (1) ;
un élément élastique (5) ayant une extrémité venant se mettre en butée contre une paroi intérieure de la première extrémité du capuchon de verrouillage (2), et l'autre extrémité venant se mettre en butée contre une première extrémité du manchon (1), l'élément élastique (5) étant configuré pour exercer une pression sur le manchon (1) quand le capuchon de verrouillage (2) se déplace vers le manchon (1) ;
un actionneur de rotation (3) installé à l'extérieur du manchon (1) ; dans lequel l'actionneur de rotation (3) est doté d'un trou traversant non circulaire servant à insérer le manchon (1), une paroi extérieure du manchon (1) est formée avec une partie de transmission afin de correspondre au trou traversant non circulaire, une deuxième extrémité du manchon (1) est dotée d'une troisième partie de limitation (1.3) s'étendant vers l'extérieur, la paroi extérieure du manchon (1) est dotée, au milieu de celle-ci, d'une quatrième partie de limitation (1.4) s'étendant vers l'extérieur, et l'actionneur de rotation (3) est emmanché entre la troisième partie de limitation (1.3) et la quatrième partie de limitation (1.4) ; et
lors de l'utilisation, le premier plan incliné de verrouillage (1.1.3.1) du manchon (1) est poussé pour serrer l'arbre d'entraînement (4) à des fins d'assemblage, par une force élastique générée en raison de la compression et de la déformation de l'élément élastique (5) quand le capuchon de verrouillage (2) se déplace vers le manchon (1) ;
dans lequel une paroi latérale de l'arbre d'entraînement (4) est formée avec un deuxième plan incliné de verrouillage (4.3.1) afin de correspondre au premier plan incliné de verrouillage (1.1.3.1) ; le deuxième plan incliné de verrouillage (4.3.1) va en s'élargissant vers l'extérieur dans une direction allant vers une deuxième extrémité de l'arbre d'entraînement (4) ; l'arbre d'entraînement (4) a une première extrémité construite avec une partie de verrouillage (4.1), et quand le capuchon de verrouillage (2) est tourné selon un certain angle, le capuchon de verrouillage (2) est verrouillé sur la partie de verrouillage (4.1) ou est déverrouillé.

2. Ensemble de rotation selon la revendication 1, dans lequel le capuchon de verrouillage (2) est doté, au niveau de son ouverture (2.2), d'une première partie de limitation (2.3) s'étendant vers l'intérieur, la première extrémité du manchon (1) est dotée d'une deuxième partie de limitation (1.2) s'étendant vers l'extérieur, et la première partie de limitation est configurée pour être en contact et s'adapter avec la deuxième partie de limitation (1.2).

3. Ensemble de rotation selon la revendication 2, dans lequel la première partie de limitation (2.3) va en s'élargissant vers l'extérieur dans une direction allant à l'opposé de la première extrémité du capuchon de verrouillage (2), et la deuxième partie de limitation (1.2) va en s'élargissant vers l'extérieur dans une direction allant vers une deuxième extrémité du manchon (1).

4. Ensemble de rotation selon la revendication 1, dans lequel la paroi intérieure de la première extrémité du capuchon de verrouillage (2) est dotée d'un montant de guidage (2.4) s'étendant vers la deuxième extrémité du capuchon de verrouillage (2), et le montant de guidage (2.4) est configuré pour guider l'élément élastique (5) afin qu'il s'étire et se rétracte le long de la direction axiale du montant de guidage (2.4).

5. Ensemble de rotation selon la revendication 4, dans lequel le montant de guidage (2.4) et le trou d'insertion (2.1) sont tous les deux coaxiaux par rapport au capuchon de verrouillage (2), et le trou d'insertion (2.1) pénètre axialement dans le montant de guidage (2.4).

6. Ensemble de rotation selon l'une quelconque des revendications 1 à 5, dans lequel le trou traversant axial (1.1) comporte un trou vertical (1.1.1), un trou de réglage (1.1.2) et un trou de verrouillage (1.1.3) qui communiquent de manière séquentielle de la première extrémité du manchon (1) à la deuxième extrémité du manchon (1), le premier plan incliné de verrouillage (1.1.3.1) est formé sur une paroi intérieure du trou de verrouillage (1.1.3), et le trou vertical (1.1.1) a une dimension de section transversale ne dépassant pas une dimension de section transversale minimale du trou de verrouillage (1.1.3) et du trou de réglage (1.1.2).

7. Ensemble de rotation selon la revendication 6, dans lequel la paroi intérieure du trou de verrouillage (1.1.3) est formée avec une partie d'entraînement afin de correspondre à la manière d'une transmission, à un arbre d'entraînement (4) à assembler.

8. Ensemble de rotation selon la revendication 7, dans lequel la partie d'entraînement est un plan vertical, une structure de prisme polygonal, une structure surélevée ou une structure évidée.

9. Ensemble de rotation selon les revendications 1 à 5, dans lequel la troisième partie de limitation (1.3) va en s'élargissant vers l'extérieur le long d'une direction allant vers la première extrémité du manchon (1) ou l'actionneur de rotation comporte au moins l'un parmi un couteau rotatif, un crochet rotatif, une griffe rotative, un bâton rotatif et une palette rotative.

10. Ensemble de rotation selon les revendications 1 à 9, dans lequel, dans le cas de figure où le trou traversant axial comporte un trou vertical (1.1.1), un trou de réglage (1.1.2) et un trou de verrouillage (1.1.3) qui communiquent de manière séquentielle de la première extrémité du manchon (1) à la deuxième extrémité du manchon (1), l'arbre d'entraînement (4) comporte une section de verrouillage (4.3) et une section verticale (4.2) reliées de manière séquentielle, le deuxième plan incliné de verrouillage (4.3.1) est formé sur une paroi latérale de la section de verrouillage (4.3), et la section verticale (4.2) est configurée afin de correspondre au trou vertical (1.1.1), éventuellement, dans lequel le trou de verrouillage a une longueur qui est plus petite que celle de la section de verrouillage (4.3).

11. Ensemble de rotation selon les revendications 1 à 10, dans lequel le trou d'insertion (2.1) du capuchon de verrouillage (2) est un trou en forme de bande, et la forme de section transversale de la partie de verrouillage (4.1) est adaptée à la forme du trou d'insertion (2.1).

12. Récipient, comportant un corps de récipient et un ensemble de rotation, dans lequel l'ensemble de rotation est l'ensemble de rotation selon l'une quelconque des revendications 1 à 11, la deuxième extrémité de l'arbre d'entraînement (4) est fixée au niveau du fond du corps de récipient, et la première extrémité de l'arbre d'entraînement (4) pénètre dans le manchon (1) et le capuchon de verrouillage (2) de manière séquentielle.

13. Robot ménager de cuisine, comportant le récipient selon la revendication 12, et le récipient est une machine à lait de soja, un blender, un presse-agrumes, un fouet, un mélangeur de pâte, un mélangeur d'aliments, une friteuse à air, un hachoir, une râpe, une marmite de cuisson automatique, une poêle à frire, une machine à soupe ou une poêle à frire automatique.
